# EUROPEAN PATENT APPLICATION

(11) **EP 2 631 813 A1**
(43) Date of publication of application: **28.08.2013**
(21) Application number: 11833873.0
(22) Date of filing: 21.10.2011
(51) Int. Cl.: G06F 17/25

(54) **METHOD AND DEVICE FOR ELIMINATING CRACKS WITHIN PAGE**

(30) Priority: 22.10.2010 CN 201010515434
(71) Applicant: Peking University Founder Group Co., Ltd, Haidian District Beijing 100871 (CN); Beijing Founder Electronics Co., Ltd., Haidian District, Beijing 100085 (CN)
(72) Inventor: HUANG, Genglin, Beijing 100085 (CN); LIN, Hao, Beijing 100085 (CN); TANG, Yu, Beijing 100085 (CN)
(74) Representative: Bugnion Genève
(86) International application number: PCT/CN2011/081149
(87) International publication number: WO 2012/051967

(57) **Abstract**

The application discloses a method and a device for eliminating a crack within a page. The method may comprise a step of generating two parallel equidistant lines for each contour vector of each of primitives within the page, wherein the two parallel equidistant lines have a predetermined threshold distance and a rectangle equidistance region formed between the generated two equidistant lines. The method may further comprise a step of traversing each of the contour vectors to take a currently traversed contour vector as a first vector and other contour vectors as second vectors, so as to determine a location relation between the first vector and each of the second vectors based on the equidistance region. And then, based on the location relation, a trapping process in an area between the first vector and the second vectors may or may not be performed. The disclosed method and device can quickly and easily detect the cracks of the pages.

## Description

### Technical Field

This application relates to digital typesetting technology, in particular to a method and a device for eliminating cracks within a page.

### Background

Because of mistakes or limited positioning accuracy in typesetting process, spatial locations of some primitives in a page are closely related under a low resolution, but are separated under a high resolution, which is referred to crack phenomenon. Such crack may significantly influence the quality of the printed page, in particular, during the trapping process for the page. Specifically, such crack will obstructs determining whether or not there is a strong color contrast on the same spatial location during the trapping process.

Currently, it is difficult to automatically detect and eliminate the crack. Firstly, it is difficult to determine a distance between contours of the primitives. A minimum distance and a maximum distance between two vectors of straight line segments may be determined by lower order linear equations. However, it is difficult to directly compute the minimum distance and the maximum distance between two vectors, of which at least one has curved sections. Generally, the distance relation of two vectors may be obtained by using a complex numerical calculation. Secondly, it is difficult to adjust the contours of primitives in the page to eliminate cracks between the primitives. It is difficult to adjust the contours of primitives without changing the original spatial locations of each of the original primitives in the adjustment process and to keep the visual effect of the original primitives unaffected after the adjusting.

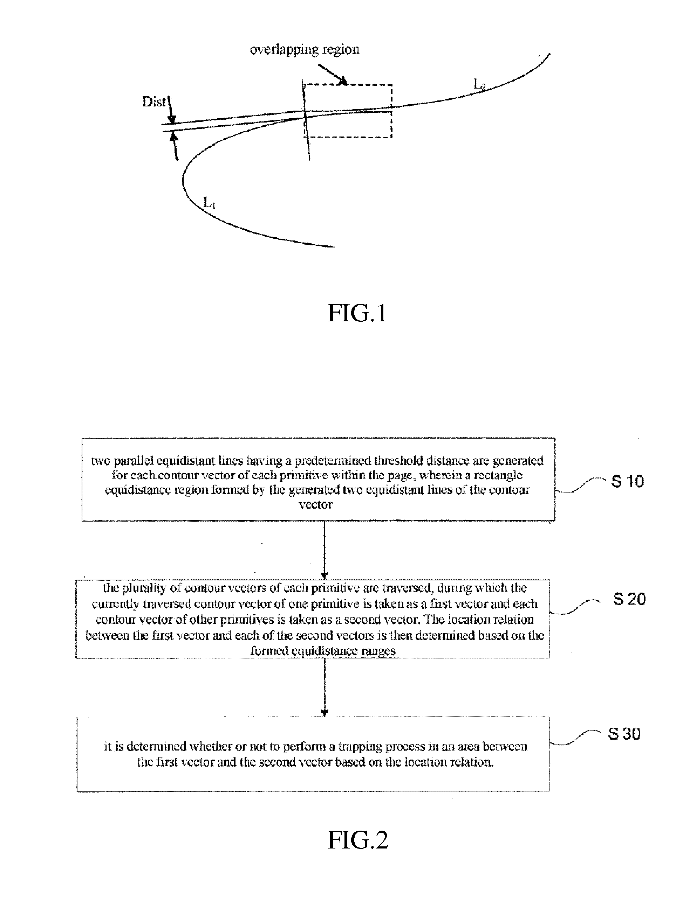

In the art, it has been defined in detail which situation shall be considered as the crack incurred within a page. In the common region of two vectors, the distances between each point on one vector of the two vectors and the other vector are determined, and then the maximum distance of these determined distances may be considered as the maximum distance between the two vectors. As shown in Fig. 1, *Dist* is the maximum distance in common region between the two vectors *L1* and *L2*.

The crack within a page is defined as follows. Given there are two primitives on the page, if a value of the maximum distance between the vectors constituting the contour of one primitive and the vectors constituting the contour of the other primitive is less than a specified crack threshold, meanwhile the two primitives are separated in a common region in which the maximum distance is less than the specified crack threshold, it means the page has a crack on this spatial location and thus the ground color of the page will be exposed. In actual processing, in the case where the maximum distance is less than the specified threshold, if the two primitives are overlapped each other in the common region, it is possible that a color region, of which the color is different from the two primitives, is generated in the common region due to mutual effects of colors of the two primitives, so that the effect is the same as that of the crack within the page. Therefore, the definition for the crack within the page may be simplified as: given there are two primitives on the page, if a value of the maximum distance between the vectors constituting the contour of one primitive (hereinafter, referred to as contour vectors) and the vectors constituting the contour of the other primitive is less than the specified crack threshold, the region in which the maximum distance is located may be considered as a crack within the page.

It may be seen from Fig.1 that it is difficult to directly calculate the distance between *L1* and *L2*. In view of the difficulties for automatically detecting and eliminating the crack within a page, a method has been proposed to transform the vectors constituting the contour of each primitive into broken lines, i.e., the vectors constituting the contour of each primitive in the page are transformed into short straight line segments, then the distances between each straight line segment are determined and offset.

However, the inventor finds that the above method has a lower working efficiency and may not reach perfect effects. Firstly, smoothness of the contour of the primitive is reduced after the curved vectors are transformed into broken lines. If the selected resolution is not high enough in the transforming process and the number of the transformed vectors increase sharply and thus the data size to be processed increase, resulting a lower efficient.

### Summary of the Application

The present application intends to provide a method and a device for eliminating a crack within a page to reduce computation and improve efficiency.

One aspect of the present application provides a method for eliminating a crack within a page. The method may comprise a step of generating two parallel equidistant lines for each contour vector of each of primitives within the page, wherein the two parallel equidistant lines have a predetermined threshold distance and a rectangle equidistance region formed between the generated two equidistant lines. The method may further comprise a step of traversing each of the contour vectors to take a currently traversed contour vector as a first vector and other contour vectors as second vectors, so as to determine a location relation between the first vector and each of the second vectors based on the equidistance region. And then, based on the location relation, a trapping process in an area between the first vector and the second vectors may or may not be performed.

Another aspect of the present application provides a device for eliminating a crack within a page. The device may comprises an equidistance module configured to generate two parallel equidistant lines having a predetermined threshold distance for each contour vector of each of primitives within the page, wherein a rectangle equidistance region formed by the generated two equidistant lines. According to the device, a location module is configured to traverse each of the contour vectors to take a currently traversed contour vector as a first vector and other contour vectors as second vectors, so as to determine a location relation between the first vector and each of the second vectors based on the equidistance region, and a trapping module configured to perform a trapping process based on the location relation.

Since the above mentioned solutions utilize the equidistance region to determine location relation between vectors, complexity of computation to be involved is reduced and the efficiency is improved compared with the conventional technique. Accordingly, the crack within the page low may be simply and quickly detected and then eliminated desirably.

### Brief Description of the Drawing

The following drawings provide further understanding for the present invention, and are a part of the present invention. The exemplary embodiments and description thereof are used to explain the present invention rather than limit the present invention.

Fig. 1 is a diagram illustrating the maximum distance between two vectors.

Fig. 2 is a diagram illustrating the flowchart of a method for eliminating the crack within the page according to one embodiment of the present application.

Fig. 3 is a diagram illustrating the flowchart for determining location relation according to one preferable embodiment of the present application.

Figs. 4-9 are a diagram illustrating the location relation according to one preferable embodiment of the present application.

Figs. 10-17 are a diagram illustrating the process for eliminating the crack between the shown primitives within the page according to one preferable embodiment of the present application.

Fig. 18 is a diagram illustrating the device for eliminating the crack within the page according to one embodiment of the present application.

### Detailed Description

Hereinafter, the embodiments of the present invention will be described in detail with reference to the detailed description as well as the drawings.

Fig. 2 is a diagram illustrating the flowchart of the method for eliminating the crack within the page according to one embodiment of the present application. The method comprises the following processes.

In step 10, two parallel equidistant lines having a predetermined threshold distance (also referred to as distance threshold) are generated for each contour vector of each primitive within the page, wherein a rectangle equidistance region formed by the generated two equidistant lines.

In step 20, the plurality of contour vectors of each primitive are traversed, during which the currently traversed contour vector of one primitive is taken as a first vector and each contour vector of other primitives is taken as a second vector. The location relation between the first vector and each of the second vectors is then determined based on the formed equidistance ranges.

In step 30, it is determined whether or not to perform a trapping process in an area between the first vector and the second vector based on the location relation.

In the conventional technology, the location relation between vectors is determined after the curved vectors are transformed into broken lines, resulting in a complex computation and a lower efficiency. In this embodiment, it is not necessary to transform the contour of each primitive within the page into broken lines, and thus the contour of each primitive within the page is kept smooth. With the equidistance region determination method, it is not needed to compute the distance between two curved vectors. Meanwhile, it is space-effective and time-effective since it is not needed to store the generated large number of vectors data during the transforming process. The method creates a fictional equidistance range, and then determines the location relation between vectors based on the equidistance range without transforming vectors into broken lines. Accordingly, the crack within the page may be quickly detected and thus eliminated.

Preferably, before generating parallel equidistant lines, the method further comprises a step of cutting the contour of the primitives at extreme points and inflection points thereof to obtain the contour vectors. By this step, it ensures that each contour is monotonic in X direction and *Y* direction and thus the involved computation will be reduced.

Hereinafter, the step of traversing will be discussed according to one preferable embodiment of the present application.

Firstly, the ends of each contour vector are ranked in X direction such that the end with a smaller *X* coordinate is ahead of that with a bigger *X* coordinate, and the end with a smaller *Y* coordinate is ahead of that with a bigger *Y* coordinate if two ends have the same *X* coordinate. A list for the ranked ends is then established, in which index values in *X* direction are set for each end in order of *X* coordinates, and index values in Y direction are set for each end in order of *Y* coordinates.

For each index value within a range between two ends (left and right ends) of each of the first vector and/or the second vector (wherein, the first vector and the second vector respectively are included in contours of two primitives), the location relation between the two vectors is determined using the equidistance region by: obtaining points of intersection between a scanning line and the equidistance region of the first vector so as to obtain the scanning line's *Y* coordinates range within the equidistance region of the first vector; retrieving end values of the second vector from the list, comparing the retrieved end values of the second vector with the obtained *Y* coordinate range; determining the retrieved end(s) of the second vector is in the equidistance region of the first vector if the retrieved value(s) of the second vector is located in the *Y* coordinates range.

The above discussed determination is simple, the logical flow is regular and may be implemented completely in digital, and thus it is easy to be implemented by the computer programs.

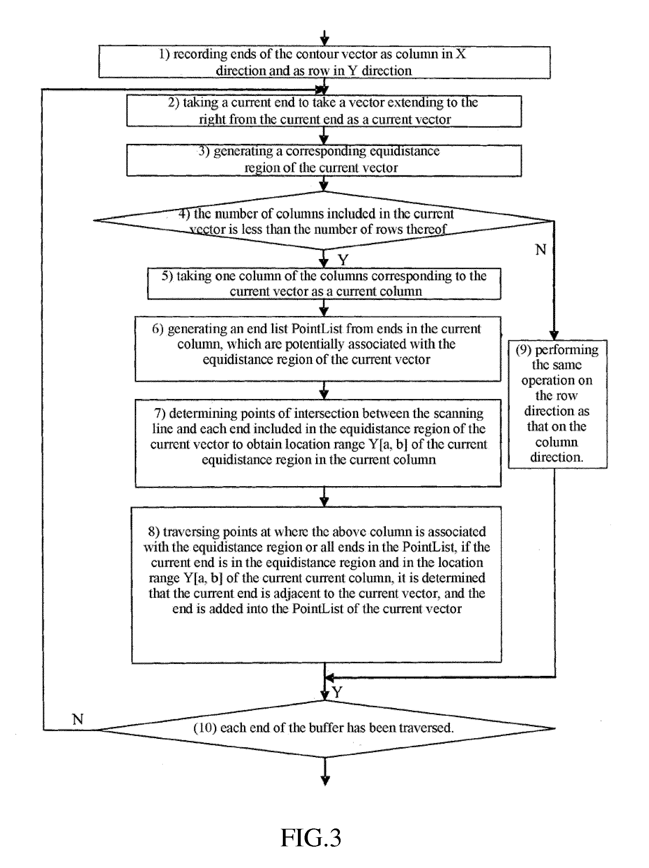

Fig. 3 is a diagram illustrating the flowchart for a method for determining location relation according to one preferable embodiment of the present application. As shown, the method may comprise:
1) pre-processing the contour vectors of each primitive to record ends of the contour vector as column in X direction and as row in Y direction, and mark the column to which each end in the X direction belong and the row to which each end in Y direction belongs;
2) taking a current end from a list which records each end of the contour vectors of each primitive to take a vector extending to the right from the current end as a current vector;
3) generating a corresponding equidistance region of the current vector according to a predetermined crack threshold;
4) turning to step 9) to operate based on the rows if the number of columns included in the current vector is greater than the number of rows thereof, otherwise turning to step 5) to operate based on the columns as the follows;
6) generating an end list *PointList* from ends in the current column, which are potentially associated with the equidistance region of the current vector;
7) determining points of intersection between the scanning line and the equidistance region of the current vector to obtain location range *Y[a, b]* of the current equidistance region in the current column;
8) traversing all ends in the *PointList, which are located in different* primitive from the primitive with the current vector, to compare each traversed end with the location range *Y[a, b]*; If an end is located in the equidistance region, a new node will be generated in the current vector based on the coordinate of the end; and
10) repeating above steps until the process for each end is done.

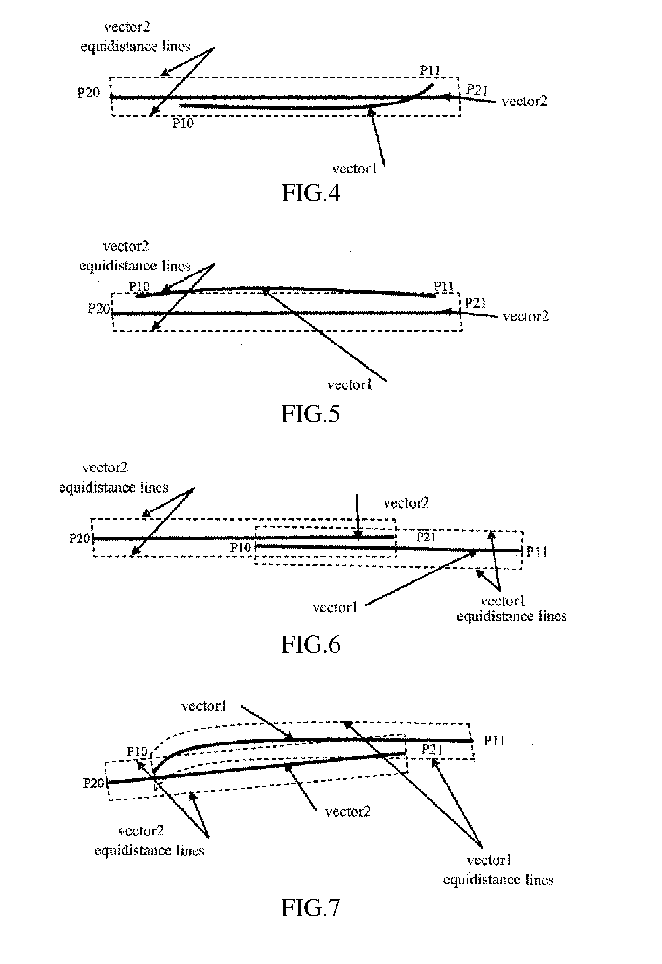

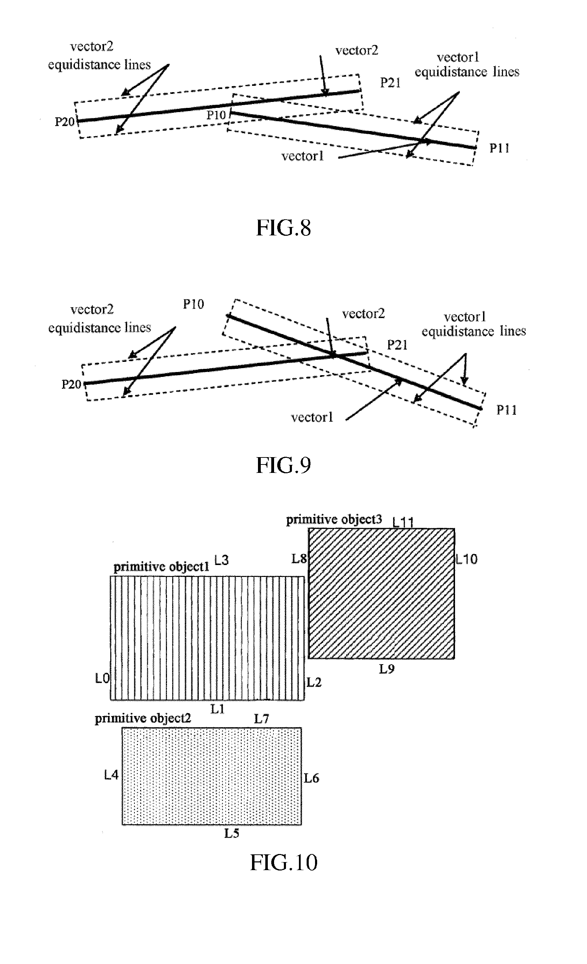

Preferably, Figs. 4-9 are a diagram illustrating the location relation according to one preferable embodiment of the present application. The location relation to be determined between the first vector (*vector 1*) and the second vector (*vector 2*) (the first vector and the second vector are respectively included in two primitives, as shown) based on the equidistance region may comprise:
Location relation 1 shown in Fig.4: two ends of *vector 1* are in the equidistance region of the *vector 2,* and there is not intersection point between *vector 1* and the equidistance lines of *vector 2;*
Location relation 2 shown in Fig.5: two ends of *vector 1* are in the equidistance region of the *vector 2,* and there is at least one intersection point between *vector 1* and the equidistance lines of *vector 2;*
Location relation 3 shown in Fig.6: only one end of *vector 1* is in the equidistance region of the *vector 2,* only one end of *vector 2* is in the equidistance region of the *vector 1,* and there is not intersection point between *vector 1* and the equidistance lines of *vector 2;*
Location relation 4 shown in Fig.7: only one end of *vector 1* is in the equidistance region of the *vector 2,* only one end of *vector 2* is in the equidistance region of the *vector 1,* and there is at least one intersection point between *vector 1* and the equidistance lines of *vector 2;*
Location relation 5 shown in Fig.8: only one end of *vector 1* is in the equidistance region of the *vector 2,* and none of ends of *vector 2* is in the equidistance region of the *vector 1;* and
Location relation 6 shown in Fig.9: none of ends of *vector 1* is in the equidistance region of the *vector 2,* and none of ends of *vector 2* is in the equidistance region of the *vector 1.*

Preferably, in step 30, for the location relations 2, 4, 5 and 6, the trapping process is not required to be performed on the range between the first vector and the second vector; for the location relations 1 and 3, the trapping process is performed in the area formed between the first vector and the second vector. Each of the location relations 2, 4, 5 and 6 indicates that the maximum distance between two vectors is greater than the equidistance threshold, and thus it is determined that there is no crack between the first vector and the second vector and thus the trapping process is not required. Each of the location relations 1 and 3 indicates that the maximum distance between two vectors is less than the equidistance threshold, and thus it is determined that there is a crack between the first vector and the second vector and the trapping process is required.

According to the above embodiment, the computation is reduced obviously compared with the conventional arts and the speed for determining the crack within the page is improved since only 6 location relations need to be determined.

Preferably, for the location relation 1, in the step of performing the trapping process between the first vector and the second vector (the first vector and the second vector are respectively included in two primitives), points A and *B* are determined on the first vector (wherein points A and B respectively correspond to two ends included in the second vector) and the second vector is moved to completely overlap with the vector AB between the two points *A* and *B.* As shown, the term "correspond" means that the end *A* is a projected end on the first vector from the corresponding end of the second vector along its normal. In this preferable embodiment, points *A* and *B* in the first vector are set as coincident points, but the invention is not limited to this manner, and it is possible that two ends of the second vector are set as coincident points.

Preferably, For the location relation 3, in the step of performing the trapping process between the first vector and the second vector, a point *A* is determined on the first vector, wherein, the point *A* corresponds to the end X included in the second vector, a point *Y* is determined on the second vector, wherein, the point Y corresponds to the end *B* included in the first vector; and the second vector is moved to completely overlap with the vector *AB* between the two points *A* and *B.* That is points *A* and *B* are coincident points. In this preferable embodiment, points *A* and *B* are set as coincident points, but the invention is not limited by this manner, and it is possible that points X and *Y* are set as coincident points.

In this step, each coincident point is traversed from the left to the right and from the top to the bottom in order of the location for each coincident point, and then vector associated with each coincident point is moved. The principle of the adjustment is as follows: if ends of a vector and a segment vector respectively locate on the location of the same coincident point, meanwhile, the distance relation of two vectors is in the crack state, the two vectors or two segment vectors are moved to completely overlap each other, i.e., to form a coincident vector; and all of the subsequent operations to be performed on the coincident vector will be performed on the two vectors constituting of the coincident vector at the same time.

The method for performing trapping process on the crack in the above embodiment is simple since it is just needed to move the vector segments to form coincident vectors.

Figs. 10-16 are a diagram illustrating the process for eliminating the crack between the shown primitives within the page according to one preferable embodiment of the present application.

As shown in the Fig. 10, there are three primitive objects 1-3 on a certain page, and the locations thereof are not fully matched and there are small cracks, as shown in Fig. 10.

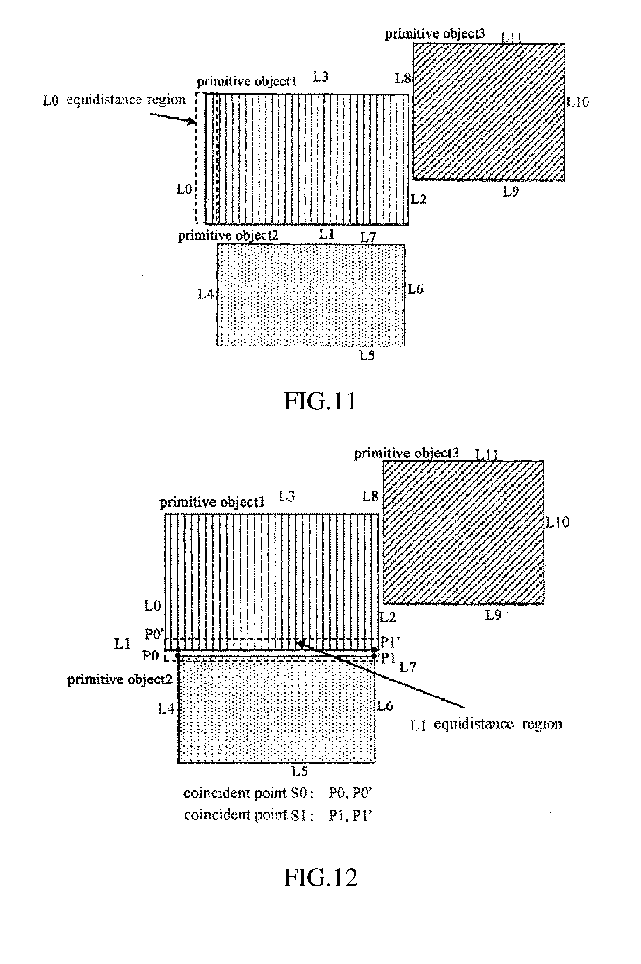

After ends of vectors of each object's contour on the page are ranked, the vector on the leftmost side is processed firstly, as shown in Fig. 11. After the equidistance region of *L0* is generated based on a predetermined crack distance threshold, it may be seen that none of ends of other objects is located in the equidistance region of L0.

Next, the vector *L1* on the leftmost side in the remanent vectors is processed, as shown in Fig. 12. After the equidistance region of *L1* is generated, it may be seen that two ends *P0* and *P1* of vector *L7* are located in the equidistance region of *L1*. Therefore, two new notes respectively corresponding to locations of *P0*' and *P1*' are generated on the vector *L1,* wherein, *P0* and *P0*'form a coincident point *S0*, and *P1* and *P1* 'form a coincident point *S1*.

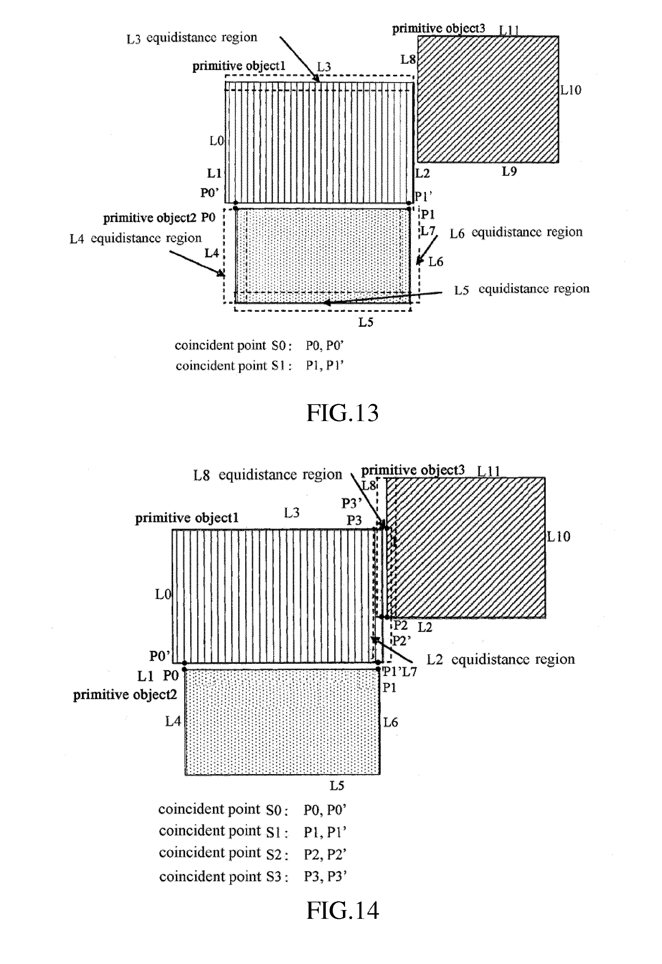

The same process is performed on the vectors *L3*, *L4, L5* and *L6* after the process for vector *L1* is finished, and it may be seen that none of ends of other objects in respective equidistance regions of the vectors *L3, L4, L5* and *L6,* as shown in Fig. 13.

However, for the vectors *L2* and *L8*, as shown in Fig. 14, an end *P3* of vector *L2* is in the equidistance region of vector *L8*, therefore, a new note *P3'is* generated on the vector *L8* to correspond to the end *P3,* wherein, *P3* and *P3*'form a coincident point *S3*. An end *P2* of vector *L8* is in the equidistance region of vector *L2*, therefore, a new note *P2*'is generated on the vector *L2* to correspond to the end *P2,* wherein P2 and P2'form a coincident point *S2.*

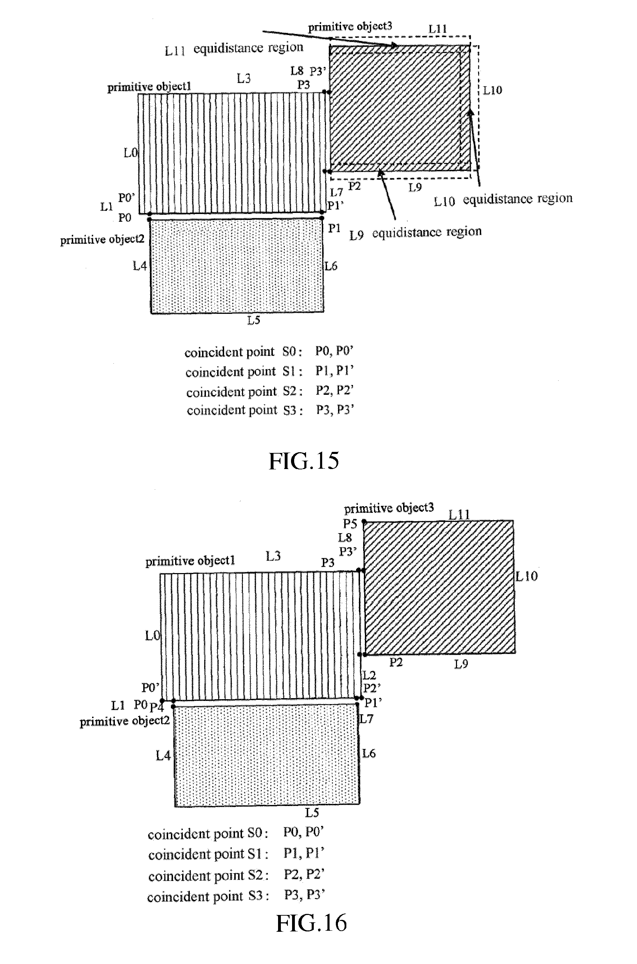

Next, each remanent vector is processed. For the vectors *L9, L10, L11* and *L12,* it may be seen that none of ends of other objects in their equidistance region, as shown in Fig. 15.

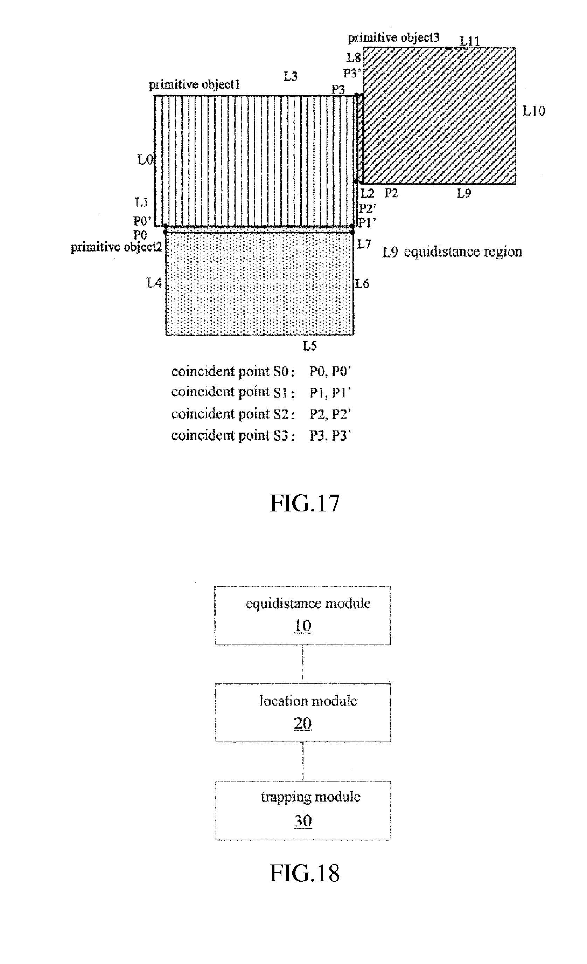

As shown in fig. 16, after all of coincident points are generated, the relations between each two vector is determined according to the generated coincident points, which comprises:
For the coincident point *S0*: the vectors associated with the coincident point *S0* includes vectors *P4P0', P0'P1', L4* and *L7;* it is determined that the relation between vectors *L7* and *P0'P1*'meet with the location relation 1, therefore, there is a crack between vectors *L7* and *P0'P1 '*;
For the coincident point *S1*: each of the right side (top side) vectors associated with the coincident point *S1* does not meet the crack relation;
For the coincident point *S2:* the relation between vectors *P2'P3* and P2P3'meet with the type 3 of vector relations, therefore, there is a crack between vectors *P2'P3* and *P2P3'.*
For the coincident point *S3:* each of the right side (top side) vectors associated with the coincident point *S3* does not meet the crack relation.
After the determination for all vectors is done, the vectors with the crack relation are adjusted. As shown in Fig. 17, the vector *L1* is moved to the location of the vector *P0'P1'* and the vector *P2P3'* is moved to the location of the vector *P2'P3.*

Fig. 18 is a diagram illustrating the device for eliminating the crack within the page according to one embodiment of the present application. The device comprises an equidistance module 10 configured to generate two parallel equidistant lines having a predetermined threshold distance (also referred to as distance threshold) for each contour vector of each primitive within the page, wherein a rectangle equidistance region formed by the generated two equidistant lines.

The device comprises further comprises a location module 20 and a trapping module 30. The location module 20 is configured to traverse the plurality of contour vectors of each primitive, during which the currently traversed contour vector of one primitive is taken as a first vector and each contour vector of other primitives is taken as a second vector. The location relation between the first vector and each of the second vectors is then determined based on the formed equidistance ranges. The trapping module 30 is configured to determine whether or not to perform a trapping process in an area formed between the first vector and the second vector based on the location relation.

The device according to the embodiment may simply and quickly detect the crack within the page, so that the crack may be eliminated desirably.

Preferably, the location relations to be determined by the location module comprises:
Location relation 1 shown in Fig.4: two ends of *vector 1* are in the equidistance region of the *vector 2,* and there is not intersection point between *vector 1* and the equidistance lines of *vector 2;*
Location relation 2 shown in Fig.5: two ends of *vector 1* are in the equidistance region of the *vector 2,* and there is at least one intersection point between *vector 1* and the equidistance lines of *vector 2;*
Location relation 3 shown in Fig.6: only one end of *vector 1* is in the equidistance region of the *vector 2,* only one end of *vector 2* is in the equidistance region of the *vector 1,* and there is not intersection point between *vector 1* and the equidistance lines of *vector 2;*
Location relation 4 shown in Fig.7: only one end of *vector 1* is in the equidistance region of the *vector 2,* only one end of *vector 2* is in the equidistance region of the *vector 1,* and there is at least one intersection point between *vector 1* and the equidistance lines of *vector 2;*
Location relation 5 shown in Fig.8: only one end of *vector 1* is in the equidistance region of the *vector 2,* and none of ends of *vector 2* is in the equidistance region of the *vector 1;* and
Location relation 6 shown in Fig.9: none of ends of *vector 1* is in the equidistance region of the *vector 2,* and none of ends of *vector 2* is in the equidistance region of the *vector 1.*

As to the location relation 2, 4, 5 and 6, the trapping module does not perform the trapping process in the area formed between the first vector and the second vector, while for the location relation 1 and 3, the trapping module performs the trapping process in the area formed between the first vector and the second vector.

According to the above embodiment, the computation is reduced obviously compared with the conventional arts and the speed for determining the crack within the page is improved since only 6 location relations need to be determined.

Preferably, the trapping module 30 may further comprise a first module configured to determine points A and B on the first vector for the location relation 1, wherein points A and B respectively correspond to two ends in the second vector, wherein, the first vector and the second vector are respectively included in two primitives. The trapping module 30 further comprises a second module configured to determine a point A on the first vector and determine a point *Y* on the second vector for the location relation 3, wherein, the point *A* corresponds to the end X included in the second vector, the point Y corresponds to the end B included in the first vector, and an adjusting module configured to make the vector *XY* in the second vector be moved to completely overlap with the vector *AB.*

The device for performing the trapping process on the crack in the above embodiment becomes simple by offsetting the coincident vector segments.

It may be seen from the above that the computation for the maximum distance between curved vectors is simplified to determine the points of intersection between curved vectors, and thus the crack within the page may be simply and quickly detected.

It will be readily apparent to those skilled in the art that the modules or steps of the present application may be implemented with a common computing device. In addition, the modules or steps of the present application may be concentrated or run in a single computing device or distributed in a network composed of multiple computing devices. Optionally, the modules or steps may be achieved by using codes of the executable program, so that they may be stored in the storage medium, or the plurality of the modules or steps may be fabricated into an individual integrated circuit module. Therefore, the present application is not limited to any particular hardware, software or combination thereof.

The foregoing is only preferred embodiments of the present application, and it is not intended to limit the present application. Any modifications, equivalent substitutions, improvements etc. within the spirit and principle of the present application should be included within the scope of protection of the application.

## Claims

1. A method for eliminating a crack within a page, comprising:
generating two parallel equidistant lines having a predetermined threshold distance for each contour vector of each of primitives within the page, wherein a rectangle equidistance region formed by the generated two equidistant lines;
traversing each of the contour vectors to take a currently traversed contour vector as a first vector and other contour vectors as second vectors, so as to determine a location relation between the first vector and each of the second vectors based on the equidistance region; and
performing a trapping process in an area between the first vector and the second vectors based on the location relation, or not performing the trapping process.

2. A method according to claim 1, further comprising before the generating:
cutting a contour of each of the primitives at extreme points and inflection points thereof to obtain a plurality of the contour vectors.

3. A method according to claim 2, wherein the traversing further comprises:
ranking the ends of each contour vector in X direction such that the end with a smaller X coordinate is ahead of that with a bigger X coordinate, and the end with a smaller Y coordinate is ahead of that with a bigger Y coordinate if two ends have the same X coordinate;
establishing a list for the ranked ends, in which index values in X direction are set for each end in order of X coordinates, and index values in Y direction are set for each end in order of Y coordinates;
determining the location relation between the two vectors is based on the equidistance region for each index value within a range between left and right ends of each of the first vector and/or the second vector, comprising:
obtaining points of intersection between a scanning line and the equidistance region of the first vector so as to obtain the scanning line's Y coordinates range within the equidistance region of the first vector;
retrieving end values of the second vector from the list,
comparing the retrieved end values of the second vector with the obtained *Y* coordinate range;
determining the retrieved end(s) of the second vector is in the equidistance region of the first vector if the retrieved value(s) of the second vector is located in the Y coordinates range.

4. A method according to claim 1, wherein, the location relations between the first vector and each of the second vectors comprise:
location relation 1: two ends of the first vector are in the equidistance region of the second vectors, and there is not intersection point between the first vector and the equidistance lines of the second vector;
location relation 2: two ends of the first vector are in the equidistance region of the second vector, and there is at least one intersection point between the equidistance line of the first vector and the equidistance line of the second vector;
location relation 3: only one end of the first vector is in the equidistance region of the second vector, only one end of the second vector is in the equidistance region of the first vector, and there is no intersection point between the equidistance lines of the first vector and the second vector;
location relation 4: only one end of the first vector is in the equidistance region of the second vector, only one end of second vector is in the equidistance region of the first vector, and there is at least one intersection point for the equidistance lines of the first vector and the second vector;
location relation 5: only one end of the first vector is in the equidistance region of the second vector, none of ends of the second vector 2 is in the equidistance region of the first vector; and
location relation 6: none of ends of the first vector is in the equidistance region of the second vector and none of ends of the second vector is in the equidistance region of the first vector.

5. A method according to claim 4, wherein the step of performing or not performing comprises:
performing the trapping process between the first vector and the second vector for said location relation 2, 4, 5 and 6; and
not performing the trapping process between the first vector and the second vector for the location relation 1 and 3.

6. A method according to claim 5, wherein the step of performing the trapping process between the first vector and the second vector further comprises:
determining points *A* and *B* on the first vector for the location relation 1, wherein the points A and B respectively correspond to two ends included in the second vector; and
adjusting the second vector as a vector *AB.*

7. A method according to claim 5, wherein the step of performing the trapping process between the first vector and the second vector further comprises:
determining a point A on the first vector and a point Y on the second vector for the location relation 3, wherein the point A corresponds to an end X included in the second vector, the point *Y* corresponds to an end *B* included in the first vector; and
adjusting the second vector as a vector *AB.*

8. A device for eliminating a crack within a page, comprising:
an equidistance module configured to generate two parallel equidistant lines having a predetermined threshold distance for each contour vector of each of primitives within the page, wherein a rectangle equidistance region formed by the generated two equidistant lines;
a location module configured to traverse each of the contour vectors to take a currently traversed contour vector as a first vector and other contour vectors as second vectors, so as to determine a location relation between the first vector and each of the second vectors based on the equidistance region; and
a trapping module configured to perform or not perform a trapping process based on the location relation.

9. A device according to claim 8, wherein the location relations to be determined by the location module comprise:
location relation 1: two ends of the first vector are in the equidistance region of the second vectors, and there is not intersection point between the first vector and the equidistance lines of the second vector;
location relation 2: two ends of the first vector are in the equidistance region of the second vector, and there is at least one intersection point between the equidistance line of the first vector and the equidistance line of the second vector;
location relation 3: only one end of the first vector is in the equidistance region of the second vector, only one end of the second vector is in the equidistance region of the first vector, and there is no intersection point between the equidistance lines of the first vector and the second vector;
location relation 4: only one end of the first vector is in the equidistance region of the second vector, only one end of second vector is in the equidistance region of the first vector, and there is at least one intersection point for the equidistance lines of the first vector and the second vector;
location relation 5: only one end of the first vector is in the equidistance region of the second vector, none of ends of the second vector 2 is in the equidistance region of the first vector; and
location relation 6: none of ends of the first vector is in the equidistance region of the second vector and none of ends of the second vector is in the equidistance region of the first vector.

10. A device according to claim 9, wherein, the trapping module comprises:
a first module configured to determine points *A* and *B* on the first vector for the location relation 1, wherein points *A* and *B* respectively correspond to two ends included in the second vector;
a second module configured to determine a point *A* on the first vector and determine a point *Y* on the second vector for the location relation 3, wherein the point *A* corresponds to an end *X* included in the second vector, the point *Y* corresponds to an end *B* included in the first vector;
an adjusting module configured to adjust a vector *XY* in the second vector as a vector *AB.*
